# EUROPEAN PATENT APPLICATION

(11) **EP 4 682 057 A1**
(43) Date of publication of application: **21.01.2026**
(21) Application number: 25190030.4
(22) Date of filing: 16.07.2025
(51) Int. Cl.: B64D 43/00, G02B 27/00, G09G 5/02, G06F 3/01, G06N 3/045

(54) **SYSTEMS, APPARATUSES, METHODS, AND COMPUTER PROGRAM PRODUCTS FOR ADAPTIVE TUNING OF MOTION STABILIZATION MODEL USING ARTIFICIAL INTELLIGENCE**

(30) Priority: 18.07.2024 IN 202411054972; 21.10.2024 US 202418922136
(71) Applicant: Honeywell International Inc., Charlotte, NC 28202 (US)
(72) Inventor: KHAN, Kalimulla, Charlotte, 28202 (US); J, Kirupakar, Charlotte, 28202 (US); RAJENDRAN, Ramkumar, Charlotte, 28202 (US); LEIPHON, Kenneth M., Charlotte, 28202 (US); MOORE, Eric M., Charlotte, 28202 (US)
(74) Representative: Haseltine Lake Kempner LLP

(57) **Abstract**

Embodiments of the present disclosure provide techniques for adaptive tuning of motion stabilization models using artificial intelligence. A motion stabilization model for use with a device may be identified. Context data associated with a device may be identified. Metadata comprising one or more model parameters for the motion stabilization model may be identified. Model adjustment data may be generated based on the context data and the metadata by applying the context data and the metadata to a machine learning tuning model. The model adjustment data may be applied to the motion stabilization model to tune the motion stabilization model. The motion stabilization model may be configured to facilitate motion stabilization to account for screen motion of the display of the device and eye motion of a user relative to each other in a vehicle.

## Description

### CROSS-REFERENCE TO RELATED APPLICATIONS

This application claims the benefit of U.S. Provisional Patent Application No. 63/593,860, filed October 27, 2023 and India Provisional Patent Application No. 202411054972, filed July 18, 2024, the entire contents of which are incorporated by reference herein.

### TECHNOLOGICAL FIELD

The present disclosure is generally directed to motion stabilization. Example embodiments are directed to systems, apparatuses, method, and computer program products for adaptive tuning of motion stabilization model for displays using artificial intelligence.

### BACKGROUND

Various embodiments of the present disclosure address technical challenges related to motion stabilization in displays. Through applied effort, ingenuity, and innovation, Applicant has solved problems related to motion stabilization by developing solutions embodied in the present disclosure, which are described in detail below.

### BRIEF SUMMARY

In general, embodiments of the present disclosure provide methods, apparatus, systems, computer program products, and/or the like for adaptive tuning of motion stabilization models using artificial intelligence.

In accordance with one aspect of the present disclosure a computer-implemented method for adaptive tuning of motion stabilization model is provided. The computer-implemented method is executable utilizing any of a myriad of computing device(s) and/or combinations of hardware, software, and/or firmware. In some example embodiments, an example computer-implemented method comprises identifying, by one or more processors, a motion stabilization model associated with a device having a display; identifying, by the one or more processors, context data associated with the device; identifying, by the one or more processors, metadata comprising one or more model parameters for the motion stabilization model; generating, by the one or more processors, model adjustment data based on the context data and the metadata by applying the context data and the metadata to a machine learning tuning model; and applying, by the one or more processors, the model adjustment data to the motion stabilization model to tune the motion stabilization model, wherein the motion stabilization model is configured to facilitate motion stabilization to account for screen motion of the display of the device and eye motion of a user relative to each other in a vehicle.

In some example embodiments, the computer-implemented method further comprises accessing the machine learning tuning model from cloud services.

In some example embodiments, the one or more model parameters comprise one or more of gaze, gain, roll angle, or drift correction.

In some example embodiments, the device is one of a smartphone, a laptop computer, an avionics display, a primary flight device, or a heads down display.

In some example embodiments, identifying the motion stabilization model comprises retrieving the motion stabilization model from a cloud services.

In some example embodiments, facilitating the motion stabilization comprises adjusting a position of an object on the display of the device based at least in part on a predicted gaze position deviation data of a user's eye.

In some example embodiments, the motion stabilization model comprises one or more of (i) eye angular VOR motion prediction model or (ii) eye angular position tracking model.

In accordance with another aspect of the present disclosure, an apparatus for adaptive tuning of motion stabilization model is provided. The apparatus in some embodiments includes at least one processor and at least one non-transitory memory, the at least one non-transitory memory having computer-coded instructions stored thereon. The computer-coded instructions in execution with the at least one processor causes the apparatus to perform any of the example computer-implemented methods described herein. In some other embodiments, the apparatus includes means for performing each step of any of the computer-implemented methods described herein.

In accordance with another aspect of the present disclosure, a computer program product for adaptive tuning of motion stabilization model is provided. The computer program product in some embodiments includes at least one non-transitory computer-readable storage medium having computer program code stored thereon. The computer program code in execution with at least one processor is configured for performing any one or the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
Figure 1 shows an example system environment within which at least some example embodiments of the present disclosure may operate.
Figure 2 illustrates a block diagram of an apparatus in accordance with at least some example embodiments of the present disclosure.
Figure 3 is a flow chart diagram showing example process for adaptive motion stabilization tuning in accordance with at least some example embodiments of the present disclosure.
Figure 4 provides an example visualization of motion stabilization software development kit in accordance with at least some example embodiments of the present disclosure
Figure 5 provides an example user interface showing various parameters and associated data rendered thereon in accordance with at least some example embodiments of the present disclosure.
Figure 6 provides a block diagram of data flow and environment associated with tuning a motion stabilization model in accordance with at least some embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### Overview and Technical Improvements

Example embodiments disclosed herein address technical challenges associated with motion stability. Motion sickness is a condition that affects a significant number of people who use mobile devices while on the move. It is caused by a mismatch between the visual, vestibular, and proprioceptive systems, which can lead to symptoms such as nausea, dizziness, and vomiting. In mobile devices, this mismatch can be caused by the vibrations that occur when the device is in motion, leading to discomfort and reduced usability for users. The severity of motion sickness symptoms caused by vibrations in mobile devices can vary widely depending on a number of factors, including the individual's susceptibility to motion sickness, the intensity and frequency of the vibrations, and the duration of device use. Research has shown that prolonged use of mobile devices while in motion can increase the likelihood and severity of motion sickness symptoms.

In this regard, there are numerous devices, applications, domains, environments, and scenarios in which motion stabilization systems are desirable. Further, as would be understood by one skilled in the field to which this disclosure pertains, a motion stabilization model that is adaptable to various scenarios, contexts, and/or devices is desirable. Use of a static motion stabilization model in numerous devices, applications, domains, environments, and scenarios dictate a need for a motion stabilization model that is adaptable to various scenarios, contexts, and/or devices is desirable.

Embodiments of the present disclosure provide an artificial intelligence (AI) driven automated method that dynamically tunes motion stabilization algorithm based on, for example, context, such that the motion stabilization algorithm can function in and/or on a rapid changing environment on the target device. In this regard, embodiments of the present disclosure stabilizes a display of a device in a dynamic context.

Example embodiments determine the current context of the target device or system by performing situation awareness evaluations. Example embodiments retrieve or access a motion stabilization model (also referred to herein, interchangeably as stabilization model) from the cloud (e.g., download a motion stabilization model from the cloud). Example embodiments automatically populate metadata for controlling the motion stabilization model to function with the display of the target device or system. Example embodiments evaluate the metadata based upon dynamically changing context of the target device or system and tune the motion stabilization model to use the metadata that is dynamically provided to the target device or system such that the motion stabilization model is tailored to the particular context (e.g., jogging, cycling, driving, and/or the like). In this regard, example embodiments of the present disclosure provide for use of motion stabilization algorithms, models, systems, and/or the like in various target devices and across various environments. Accordingly, example embodiments, provide various technical advantages, including, in the technical field of motion stabilization and display technologies. Example embodiments, resolve existing limitations and challenges in existing systems related to motion stabilization.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment ... "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like

### System Architecture

Embodiments of the present disclosure may be implemented in various ways, including as computer program products that comprise articles of manufacture, as hardware, including circuitry, configured to perform one or more functions, and/or as combinations of specific hardware and computer program products. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid-state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as one or more methods, apparatuses, systems, computing devices (e.g., user devices, servers, etc.), computing entities, and/or the like. As such, embodiments of the present disclosure may take the form of an apparatus, system, computing device, computing entity, and/or the like executing instructions stored on one or more computer-readable storage mediums (e.g., via the aforementioned software components and computer program products) to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams, flowchart illustrations, and other example visualizations. It should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. In embodiments in which specific hardware is described, it is understood that such specific hardware is one example embodiment and may work in conjunction with one or more apparatuses or as a single apparatus or combination of a smaller number of apparatuses consistent with the foregoing according to the various examples described herein. Accordingly, the block diagrams and flowchart illustrations support various combinations of embodiments for performing the specified instructions, operations, or steps.

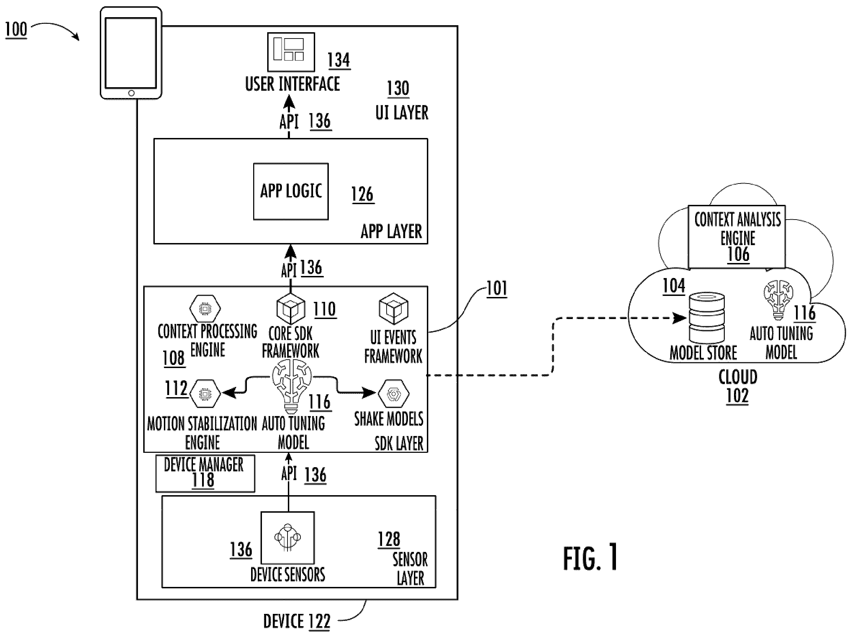

In this regard, Figure 1 shows an example system environment 100 within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, Figure 1 and the system environment 100 disclosed therein is merely presented to provide an example basis and context for the facilitation of some of the features, aspects, and uses of the methods, apparatuses, computer readable media, and computer program products disclosed and contemplated herein.

It will be understood that while many of the aspects and components presented in Figure 1 are shown as discrete, separate elements, other configurations may be used in connection with the methods, apparatuses, computer readable media, and computer programs described herein, including configurations that combine, omit, separate, and/or add aspects and/or components. For example, in some embodiments, the functions of one or more of the illustrated components in Figure 1 may be performed by a single computing device or by multiple computing devices, which devices may be local or cloud based.

As shown in Figure 1, the example system environment 100 includes an adaptive motion stabilization tuning system 101 in communication with the cloud services 102 (e.g., cloud 102). In various embodiments, the cloud services 102 include a stabilization model store 104 and one or more artificial intelligent (AI)/machine learning (ML) models 116 (also referred to herein as machine learning tuning models 116). In some embodiments, the cloud services 102 further includes a context analysis engine 106. In various embodiments, the adaptive motion stabilization tuning system 101 includes a situation analyzer engine 108 (also referred to herein as context processing engine 108), a motion stabilization software development kit 110, an auto tuning engine 112 (also referred to herein as motion stabilization engine 112), and/or a machine learning tuning model 116. Such machine learning tuning model 116 may be retrieved (e.g., downloaded) and/or accessed from the machine learning tuning models 116 in cloud services 102. In various embodiments, the adaptive motion stabilization tuning system 101 further includes a device manager 118.

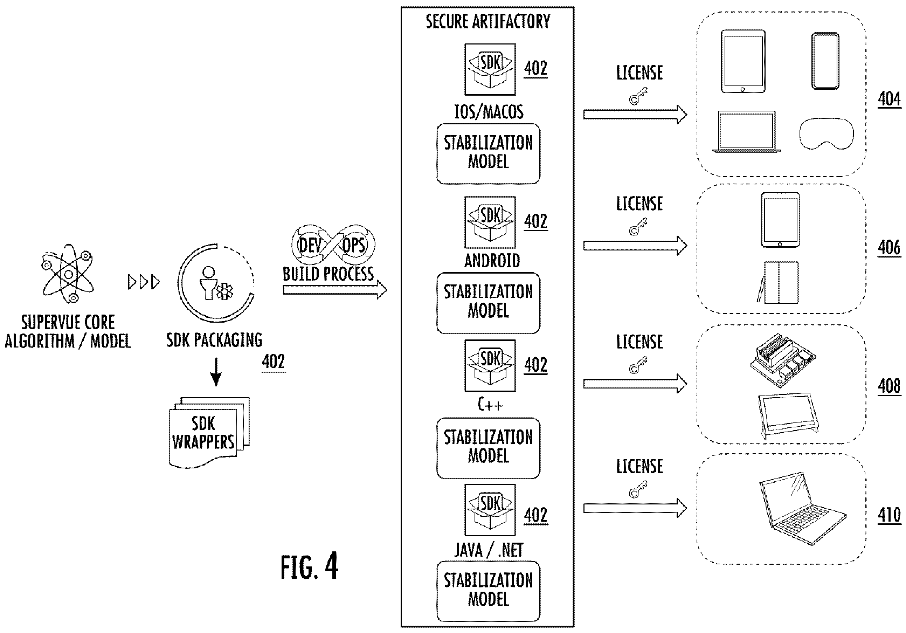

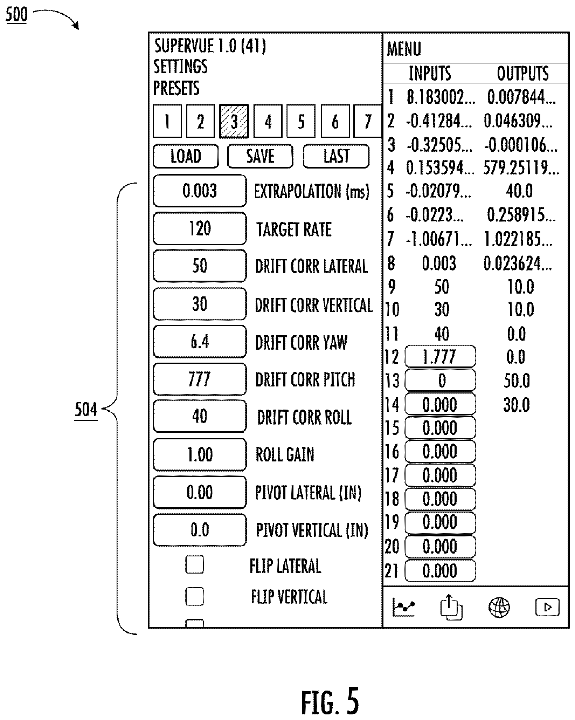

In various embodiments, a motion stabilization software development kit 110 comprises a motion stabilization model and metadata file. For example, as shown in FIG. 4, a motion stabilization model for performing motion stabilization may be packaged in a software development kit 402 comprising a motion stabilization model and metadata file (e.g., also referred to herein as stabilization metadata file). As shown in Figure 4, the software development kit 402 may be configured for use with a variety of devices (e.g., 404-410) and across various operating systems, platforms, manufacturers, and/or environments. Non-limiting examples of such devices include, but is not limited to, tablet computers, laptop computers, augmented reality devices, smart phones, notepads, and/or the like. The motion stabilization model may be configured to function based upon metadata comprising one or more model parameters. In various embodiments, the metadata includes one or more various model parameters that are tunable. In some embodiments, the tunable model parameters include gaze gain, roll angle, drift correction, and/or the like. Figure 5 provides an example user interface 500 showing various parameters 504 and associated data rendered thereon. Such model parameters 504 may include parameters defined by and/or leveraged by a motion stabilization algorithm configured to provide motion stabilization in devices (e.g., devices having a display).

In various embodiments, a motion stabilization model may be accessed or otherwise received by a device 122. Such motion stabilization model may be referred to herein as base motion stabilization model. In various embodiments, the adaptive motion stabilization tuning system 101 is configured to receive metadata associated with the motion stabilization model. In some embodiments, receiving the metadata comprises receiving, by the adaptive motion stabilization tuning system 101, one or more metadata files comprising the metadata.

In various embodiments, the adaptive motion stabilization tuning system 101 is configured to, for the device 122, perform analytics on the metadata associated with the device 122 comprising the model parameters 506 and perform dynamic model tuning operation configured to tune or otherwise modify at least a portion of the parameters 506, whereby the motion stabilization model is fine-tuned to adapt to the dynamic context (e.g., changing context). In various embodiments, the adaptive motion stabilization tuning system 101 may be configured to tune the base motion stabilization model based on current context data/information to adapt the motion stabilization model (e.g., model stabilization algorithm thereof) to the target device with respect to the current context associated with the target device. In various embodiments context data describes a current moving condition associated with the device. Non-limiting examples of such context include driving, jogging, cycling, and/or the like. In some embodiments, tuning the motion stabilization model comprises re-training the motion stabilization model, wherein such re-training may comprises adjusting or otherwise modifying one or more model parameters 506 based on the current context data (e.g., current runtime context). In this regard, in some embodiments, one or more model parameters associated with motion stabilization are fine-tuned for a given target device to achieve the motion stability service provided by the motion stabilization model. Such model parameters or portion thereof may be leveraged by the motion stabilization model to perform motion stabilization operation configured to account for screen motion and eye motion relative to each other in a high movement environment (such as a vehicle in motion) as well as human vestibulo-ocular reflex (VOR), which is a human body and vision system coupling characteristic. For example, the model parameters or portion thereof may comprise input variables defined by the motion stabilization model or algorithm thereof.

In various embodiments, performing the dynamic model tuning operation comprises generating, by the adaptive motion stabilization tuning system 101, model adjustment data based on the context data and metadata, and applying the model adjustment data to the metadata and/or to the motion stabilization model. In this regard, the adaptive motion stabilization tuning system 101 may be configured to, for a given target device, tune (e.g., modify/adjust) one or more model parameters 506 in a motion stabilization model to provide stabilization capability. Example embodiments of the present disclosure automatically tune the model parameters 506 as described above.

In various embodiments, the adaptive motion stabilization tuning system 101 leverages a machine learning tuning model 116 to perform analytics operation and dynamic model tuning operation based on metadata associated with the motions stabilization model and context data associated with the target device. For example, the tunable model parameters 506 may depend on context (e.g., scenario, environment, and/or the like). For example, model parameters such as gaze gain, roll angle, drift correction, and/or the like may depend on context such as driving, jogging, cycling, and/or the like.

In various embodiments, template files may be loaded based upon the device type and/or particular context to provide the motion stabilization. In various embodiments, an AI model is leveraged to tune the motion stabilization model based, for example, on the device type and/or context.

As described above, in some embodiments, the system environment 100 includes a device manager 118. In some embodiments, the device manager 118 is embodied by or is a component of the adaptive motion stabilization tuning system 101. In some embodiments, the device manager 118 is embodied by or is a component of one or more other layers of the device 122 (e.g., sensor layer 128, application layer 126, or user interface layer 130).

In various embodiments, the adaptive motion stabilization tuning system 101 is configured to communicate with cloud services 102. As shown in Figure 1, the adaptive motion stabilization tuning system 101 may be configured to communicate with the stabilization model store 104 to retrieve data and/or metadata (e.g., stabilization metadata) stored in the stabilization model store 104. For example, the stabilization model store 104 may be configured to store stabilization metadata for each of one or more motion stabilization models.

As shown in Figure 1, in various embodiments, the adaptive motion stabilization tuning system 101 may be embodied by a device 122 (also referred to herein as a target device 122). For example, the adaptive motion stabilization tuning system 101 may be configured for use by a device 122. Examples of device 122 include, but not limited to, tablet computers, laptop computers, augmented reality devices, smart phones, notepads, vehicle infotainment systems (e.g., car infotainments system, and/or the like), aircrafts display units, and/or the like. In some embodiments, the adaptive motion stabilization tuning system 101 represents a software development kit (SDK) layer of the device 122. In various embodiments, the device 122 further includes an application layer 126, a sensor layer 128, and a user interface layer 130. The application layer 126 may comprise an application logic 132 and the user interface layer 130 may comprise a user interface 134. The sensor layer 128 may comprise one or more device sensors 136.

In some embodiments, the sensor layer 128 (e.g., the one or more device sensors 136 thereof) may be configured to communicate with the adaptive motion stabilization tuning system 101 and/or the application layer 126 via at least one of one or more APIs 136. In some embodiments, the adaptive motion stabilization tuning system 101 may be configured to communicate with the user interface layer 130 (e.g., user interface 134 thereof) via at least one of the one or more APIs 136.

In various embodiments, one or more of the components of the device 122 is in communication with stabilization model store 104. In various embodiments, the stabilization model store 104 is configured to host one or more models (e.g., AI models, or the like) associated with one or more device contexts such as, but not limited to mobile devices, laptops, vehicle infotainment systems (e.g., car infotainments system, and/or the like), aircrafts display units, and/or the like. In various embodiments, one or more components of the target device 122 is leveraged to identify and retrieve or access, from the stabilization model store 104, the appropriate motion stabilization model based on the target device 122 and runtime environment. For example, a motion stabilization model may be retrieved and/or accessed for use with the target device 122.

As described above, in various embodiments, the motion stabilization model (also referred to herein as stabilization model) comprises or is associated with a motion stabilization algorithm configured for estimating an acceleration motion and/or angular motion of an eye of the user (e.g., reader of the content rendered on a display), estimating a position change of an eye gaze on a screen of the display based on the estimated acceleration motion and/or angular motion of the eye and eye motion due to VOR, estimating a position change of the display based on the detected acceleration motion and/or angular motion of the display, and adjusting the position of an object in a display to account for the estimated position change of the eye gaze and the estimated position change of the display to allow the eye gaze to remain fixed on the object. In some embodiments, acceleration motion is the movement of an object where the velocity is changing over time (e.g., rate of change of velocity). In some embodiments, angular motion is the movement of an object around a fixed axis or curved path.

In various embodiments, the motion stabilization model and/or motion stabilization algorithm is configured for providing stabilization to a display of a device such as device 122. For example in some embodiments, the motion stabilization model (comprising motion stabilization algorithm) is configured for estimating, or otherwise determining, an acceleration motion and/or angular motion of an eye of the user based on sensed/detected acceleration motion and/or angular motion of the display and/or the vehicle. Further, the motion stabilization algorithm and/or motion stabilization model may be configured for adjusting the position of an object on the screen of the display to account for the estimated position change of the gaze of the eye and/or the estimated position change of the display. In this regard, adjusting the position of an object on the screen of the display to account for the estimated position change of the gaze of the eye and/or the estimated position change of the display this allows the gaze of the user's eye to remain fixed on the object.

In some example embodiments, the motion stabilization algorithm is associated with, includes, and/or uses an eye angular VOR motion prediction model and/or eye angular position tracking model to estimate the position change of a gaze of the user's eye on a screen of the display. For example, the eye angular VOR motion prediction model may be configured for generating a predicted eye position due to VOR effects and the eye angular position tracking model may be configured for correcting the predicted eye position after head motion has subsided.

In various embodiments, the context analysis engine 106 is configured for providing metadata for edge systems to identify appropriate running context. In some embodiments, the context analysis engine 106 is a crowd source learning-based engine. For example, the context analysis engine 106 may be based on crowd sourced learning such that it may evolve by taking data from several target devices.

In various embodiments, the situation analyzer engine 108 is configured for analyzing the current situation context and derive, or otherwise obtain, the metadata parameters that would drive the motion stabilization model. A non-limiting example of a current situation context comprise [Target Device: Mobile Phone, Context: Transit, State: Jogging, Sub State: Jogging in a Thread mill / Mountain].

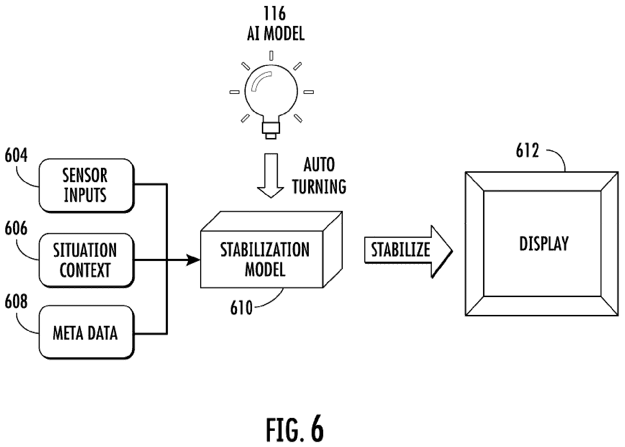

In various embodiments, the motion stabilization model may be configured for providing motion stabilization to a display, as described above. In various embodiments, the motion stabilization model receives input from the sensor data, context analysis engine, and/or a metadata file (e.g., embedded metadata file in some embodiments). For example, as shown in Figure 6, a motion stabilization model 610 may receive sensor input 604 (e.g., motion data from one or more sensors or inertial measurement units (IMUs)), context data 606 (e.g., situation context), and metadata 608 respectively from the sensor data, context analysis engine, and/or a metadata file. As shown in Figure 6, the stabilization model is configured to perform motion stabilization on an image data for rendering on a display, such as display 612. In various embodiments, the metadata (e.g., stabilization metadata) comprises a set of model parameters on which the motion stabilization model operates upon. In an example embodiment, the set of model parameters comprises roll angle, gain, pitch angle, vibration level, and/or the like.

In various embodiments, the machine learning tuning model 116 is configured for automatically and dynamically tuning (e.g., fine-tuning) the motion stabilization model to provide optimal inputs to the display to stabilize the views (e.g., objects rendered on the display). For example, in various embodiments, the auto tuning engine 112 is configured for tuning the motion stabilization model to function with respect to the target device 122 based on context which may be dynamic (e.g., dynamic context). The motion stabilization model retrieved and/or accessed from the cloud may be associated with the target device (e.g., prepared for the target device), and the auto tuning engine 112 may be configured to tune the motion stabilization model to meet the target requirements.

In various embodiments, the machine learning tuning model 116 is configured for tuning the motion stabilization model retrieved from the from the cloud services 102 (e.g., retrieved from the cloud-based stabilization model store 104 thereof). In various embodiments, the machine learning tuning model 116 is configured to evaluate the runtime context, identify key target parameters for tunning the motion stabilization model, evaluate the metadata for operation, enforce the revised metadata (e.g., evaluated metadata) for operation, implement the revised metadata (e.g., revised parameters thereof) and apply to the base stabilization model, and evaluate and record the results.

In some embodiments, the device manager 118 is configured for managing one or more components of the device 122. In an example embodiment, the device manager 118 is configured to manage one or more of the motion stabilization model, AI Model file, or stabilization metadata.

In some embodiments, the functions of one or more of the illustrated components of the adaptive motion stabilization tuning system 101 may be performed by a single computing device or by multiple computing devices, which devices may be local or cloud based. It will be appreciated that the various functions performed by two or more of the context analysis engine 106, situation analyzer engine 108, motion stabilization software development kit 110 (or one or more components thereof), auto tuning engine 112, machine learning tuning model 116, and/or device manager 118 may be performed by a single apparatus, subsystem, or system. For example, two or more of the context analysis engine 106, situation analyzer engine 108, a motion stabilization software development kit 110 (e.g. one or more components thereof), auto tuning engine 112, machine learning tuning model 116, and/or device manager 118.may be embodied by a single apparatus, subsystem, or system comprising one or more sets of computing hardware (e.g., processor(s) and memory) configured to perform various functions thereof.

In some embodiments, the functions of one or more of the illustrated components of the device 122 may be performed by a single computing device or by multiple computing devices, which devices may be local or cloud based. It will be appreciated that the various functions performed by two or more of the application layer 126, sensor layer 128, and a user interface layer 130 may be performed by a single apparatus, subsystem, or system. For example, two or more of the application layer 126, a sensor layer 128, and a user interface layer 130 may be embodied by a single apparatus, subsystem, or system comprising one or more sets of computing hardware (e.g., processor(s) and memory) configured to perform various functions thereof.

The various functions of the adaptive motion stabilization tuning system 101, the device 122, and system environment 100 may be performed by other arrangements of one or more computing devices and/or computing systems without departing from the scope of the present disclosure. In some embodiments, a computing system may comprise one or more computing devices (e.g., server(s)).

The various components illustrated in the adaptive motion stabilization tuning system 101 and system environment 100 may be configured to communicate via one or more communication mechanisms, including wired or wireless connections, such as over a network, bus, or similar connection. For example, a network may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the network may include a cellular telephone, an 802.11, 802.16, 802.20, and/or WiMAX network. Further, a network may include a public network, such as the Internet, a private network, such as an intranet, or combinations thereof, and may utilize a variety of networking protocols now available or later developed including, but not limited to TCP/IP based networking protocols.

In some embodiments, one or more APIs may be leveraged to communicate with and/or facilitate communication between one or more of the components illustrated in the adaptive motion stabilization system 101 and/or system environment 100.

### Example System Operation

In some embodiments, a base motion stabilization model is retrieved or otherwise accessed. The base motion stabilization model may comprise a motion stabilization model that has not be tuned (e.g., as described above). The base motion stabilization model may be retrieved and/or accessed from a stabilization model store 104. For example, the adaptive motion stabilization tuning system 101 (e.g., using the device manager 118 thereof) may retrieve and/or access a base motion stabilization model from the stabilization model store 104. In this regard, the target device 122 (e.g., via the adaptive motion stabilization tuning system 101) may download a base motion stabilization model. In various embodiments, the base motion stabilization model is retrieved or otherwise accessed from the cloud (e.g., based upon static parameters).

In some embodiments, the motion stabilization model is a machine learning model (e.g., a data entity that describes parameters, hyper-parameters, and/or defined operations of a rules-based algorithm, machine learning model (e.g., model including at least one or more rule-based layers, one or more layers that depend on trained parameters, coefficients, and/or the like), and/or artificial intelligence model, and/or the like). In some embodiments, the motion stabilization model may include any type of model configured, trained, and/or the like to perform one or more operations and/or tasks related to and/or to support motion stabilization, such as, for example, generating predicted gaze position deviation data, generating predicted eye position deviation data, generating predicted eye motion data, and/or the like. In this regard, a motion stabilization model may be configured to utilize one or more of any types of machine learning, rules-based, and/or artificial intelligence techniques including one or more of, supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the motion stabilization model includes model stabilization algorithm as described herein. In some embodiments, the motion stabilization algorithm includes angular VOR motion prediction algorithm and/or eye angular VOR motion prediction algorithm. In some embodiments, the motion stabilization model may represent a motion stabilization model that includes two or more models such as for example VOR motion prediction model (e.g., comprising VOR motion prediction algorithm) and/or eye angular position tracking model (e.g., comprising eye angular position tracking algorithm).

In some embodiments, a machine learning tuning model 116 is retrieved or otherwise accessed. The machine learning tuning model 116 may be retrieved from the cloud (e.g., cloud services 102). For example, the adaptive motion stabilization system (e.g., using the device manager 118 thereof) may retrieve or access the machine learning tuning model 116 from the cloud services 102. In this regard, the target device 122 (e.g., via the adaptive motion stabilization tuning system 101) may download a machine learning tuning model 116 from the cloud services onto the device such as device 122 or otherwise access a machine learning tuning model 116 hosted in the cloud.

In some embodiments, the machine learning tuning model is a machine learning model (e.g., a data entity that describes parameters, hyper-parameters, and/or defined operations of a rules-based algorithm, machine learning model (e.g., model including at least one or more rule-based layers, one or more layers that depend on trained parameters, coefficients, and/or the like), and/or artificial intelligence model, and/or the like). In some embodiments, the machine learning tuning model may include any type of model configured, trained, and/or the like to perform one or more operations and/or tasks related to and/or to support context-aware tuning of a base motion stabilization model, such as for example performing analytic operations on stabilization metadata, performing dynamic tuning operation based on context data, and/or the like.. In this regard, a machine learning tuning model may be configured to utilize one or more of any types of machine learning, rules-based, and/or artificial intelligence techniques including one or more of, supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the motion stabilization model includes model stabilization algorithm as described herein. In some embodiments, motion stabilization algorithm includes angular VOR motion prediction algorithm and/or eye angular VOR motion prediction algorithm. In some embodiments, the motion stabilization model may represent a motion stabilization model that includes two or more models such as for example VOR motion prediction model (e.g., comprising VOR motion prediction algorithm) and/or eye angular position tracking model (e.g., comprising eye angular position tracking model algorithm).

In some embodiments, runtime parameters are established or otherwise prepared for the overall system state. In some embodiments, the adaptive motion stabilization tuning system 101 leverages the situation analyzer engine 108 thereof to evaluate the runtime parameters and establish or otherwise prepare the overall system state.

In some embodiments, the adaptive motion stabilization tuning system 101 (e.g., context analysis engine 106 thereof) identifies context data (e.g., current context) associated with the device 122 that includes or is otherwise associated with base motion stabilization model. In various embodiments, the adaptive motion stabilization tuning system 101 (e.g., using the context analysis engine 106 thereof) is configured to communicate with one or more edge systems and/or edge devices to identify the context data. **In** some embodiments, the edge systems and/or devices may comprise one or more sensors and/or devices configured for measuring and/or collecting various data representative and/or indicative of a current context associated with the device 122. Alternatively or additionally, in some embodiments, the edge systems and/or devices may comprise one or more sensors and/or devices configured for measuring and/or collecting various data that are leveraged by the adaptive motion stabilization tuning system 101 to generate the context data.

**In** some embodiments, identifying the context data comprises the adaptive motion stabilization tuning system 101 (e.g., context analysis engine 106 thereof) providing metadata for edge systems to identify the context data. Such context data may be referred to as running context in some examples. In some embodiments, the context analysis engine 106 is a crowd source learning-based engine. For example, the context analysis engine 106 may be based on crowd sourced learning such that it is configured to learn and evolve based on data from several target devices.

In some embodiments, the adaptive motion stabilization tuning system 101 (e.g., using the situation analyzer engine 108 thereof) identifies context data (e.g., current context) associated with the device 122 associated with base motion stabilization model. In various embodiments, the adaptive motion stabilization tuning system 101 (e.g., using the situation analyzer engine 108 thereof).

In some embodiments, the adaptive motion stabilization tuning system 101 (e.g., using the situation analyzer engine 108 thereof) identifies stabilization metadata associated with the base motion stabilization model and/or the device 122 comprising or otherwise associated with the base motion stabilization model. In some embodiments, identifying the stabilization metadata comprises, the adaptive motion stabilization tuning system 101, receiving and/or retrieving, from the cloud, metadata file comprising the metadata for the base motion stabilization model. As described, in some embodiments, the stabilization metadata comprises one or more items of data representative and/or indicative of or more model parameters associated with the base motion stabilization model. The one or more model parameters for example may represent input variables of the motion stabilization model. In some embodiments, the one or more model parameters are configured to drive the motion stabilization model.

In some embodiments, the adaptive motion stabilization tuning system 101 (e.g., using the situation analyzer engine 108 thereof) is configured to determine or otherwise select one or more model parameters from a plurality of model parameters in the metadata file based on the context data. The one or more selected parameters may represent target parameters for tuning by the adaptive motion stabilization tuning system 101 based on the current context. For example, the selected one or more model parameters (e.g., target parameters) may comprise tunable parameters that would drive or otherwise affect the performance of the motion stabilization model with respect to the target device and current context.

For example, in some embodiments, the situation analyzer engine 108 of the adaptive motion stabilization tuning system 101 is configured to analyze the context data (e.g., current context) and derive, obtain, or otherwise identify, the target model parameters that would drive the motion stabilization model. In some embodiments, current context data may be represented as a data object (e.g., context data object) comprises one or more items of data that, individually or collectively describe a current context. Each of the one or more items of data may represent a particular context data category. For example, the current context data may include target device type (e.g., mobile device, electronic flight bag, and/or the like); device context (e.g., transit, stationary, and/or the like); state of a user associated with the device 122 (e.g., jogging, running, and/or the like); sub state (e.g., jogging on a thread-mill, running on a mountain, and/or the like).

In some embodiments, the adaptive motion stabilization tuning system 101 (e.g., using the situation analyzer engine 108) is configured to monitor a state of the device 122 with respect to certain events. In some embodiments, in response to occurrence of one or more of such certain events (e.g., an event being triggered), the motion stabilization tuning systems continuously or periodically monitors the device state (e.g., state of the target device 122) for changes in device behavior or underlying system behavior of the device. In some embodiments, such certain events may correspond to contest data (as described above).

In some embodiments, the adaptive motion stabilization tuning system 101 (using the auto tuning engine 112) is configured to leverage the machine learning tuning model 116 to tune the base stabilization model based on the context data and stabilization metadata by performing model tuning task that comprises analytics and dynamic tuning operation. For example, the machine learning tuning model 116 may be configured to perform analytics on the metadata based on the context data to generate model adjustment data and apply the model perform dynamic tuning operation based on the model adjustment data by applying the model adjustment data to the one or more model parameters in the motion stabilization model. In some embodiments, the one or more model parameters comprise identified target parameters as described above. In some embodiments, tuning the base motion stabilization model comprises generating modified metadata and applying the modified metadata to the base motion stabilization model.

In this regard, in some embodiments, the motion stabilization model is tuned based on the evaluated and analyzed model parameters to meet the dynamically changing context. In some embodiments, the adaptive motion stabilization tuning system 101 is configured to provision, establish, and/or initialize one or more shake models along with modified metadata for the motion stabilization model such that the motion stabilization model may operate in various embodiments.

In various embodiments, the motion stabilization model (e.g., with respect to stabilization runtime) is configured to provide inputs to the display of the device to provide motion stabilization services based on the context.

In various embodiments, the adaptive motion stabilization tuning system 101, using the motion stabilization model (e.g., tuned motion stabilization model) is configured to perform motion stabilization to account for screen motion and eye motion relative to each other in a high movement environment as well as human vestibulo-ocular reflex (VOR)-a human body and vision system coupling characteristic.

A normal VOR response is a compensatory eye movement that counters head movement when the human neural system detects motion of the head in space. For instance, rotating the head on a horizontal plane to the right will induce the eye to rotate left relative to the head coordinate frame to stabilize the visual axis of the gaze and keep the image fixed on the retina during the head motion. This eye motion due to the VOR, however, is not an exact inverse of the head motion due to the dynamic effects from the neural sensors and oculomotor nucleus response and can result in an eye gaze being offset from a viewed object on a screen in a high motion environment. In various embodiments, the adaptive motion stabilization tuning system 101 leverages eye VOR compensation to enhance the performance of the adaptive motion stabilization tuning system 101.

In some embodiments, a first image for display (e.g., rendering) on a display (referred to herein interchangeably as screen) of a device is received. For example, the adaptive motion stabilization tuning system 101 may be configured to receive a first image for display on a display of a device. The first image may represent and/or comprise at least one object (e.g., visual representation of one or more objects). In various embodiments, the device is associated with a vehicle, such as described above.

In some embodiments, the adaptive motion stabilization tuning system 101 detects (e.g., sense, determine, or the like) acceleration motion and/or angular motion of the device. In some embodiments, the adaptive motion stabilization tuning system 101 detects the acceleration motion based on one or more sensors 138 (e.g., one or more device sensors 138). In some embodiments, the one or more sensors may be associated with one or more display IMUs (referred to herein interchangeably as device IMUs). In some embodiments, the adaptive motion stabilization tuning system 101 detects the angular motion of the device based on one or more sessors (which may be associated with one or more display IMUs associated with the device). In some embodiments, detecting the acceleration motion of the device comprises, the adaptive motion stabilization tuning system 101, receiving display acceleration motion data from the one or more sensors or otherwise display IMUs associated with the device, wherein the display acceleration motion data comprises one or more items of data representative and/or indicative of acceleration motion of the device. In some embodiments, detecting the angular motion of the device comprises, the adaptive motion stabilization tuning system 101, receiving display angular motion data from one or more sensors or display IMUs associated with the device, wherein the display angular motion data comprises one or more items of data representative and/or indicative of angular motion of the device.

In some embodiments, the adaptive motion stabilization tuning system 101 detect s acceleration motion of the vehicle in which the device and user associated with the device is located. In some embodiments, the adaptive motion stabilization tuning system 101 detects angular motion of the vehicle in which the device and user associated with the device is located. For example, the adaptive motion stabilization tuning system 101 may detect the acceleration motion of the vehicle in an X, Y, Z axis and detect the angular motion (e.g., azimuth, elevation, and roll) of the vehicle.

In some embodiments, the adaptive motion stabilization tuning system 101 detects the acceleration motion of the vehicle based on one or more vehicle IMUs and/or other devices associated with the vehicle. In some embodiments, the adaptive motion stabilization tuning system 101 detects the angular motion of the vehicle based on one or more vehicle IMUs and/or other devices associated with the vehicle. In some embodiments, detecting the acceleration motion of the vehicle comprises, the adaptive motion stabilization tuning system 101, receiving vehicle acceleration motion data from the one or more display IMUs and/or other devices associated with the vehicle, wherein the vehicle acceleration motion data comprises one or more items of data representative and/or indicative of acceleration motion of the vehicle. In some embodiments, detecting the angular motion of the vehicle comprises, the adaptive motion stabilization tuning system 101, receiving vehicle angular motion data from one or more vehicle IMUs and/or other devices associated with the vehicle, wherein the vehicle angular motion data comprises one or more items of data representative and/or indicative of angular motion of the vehicle. In this regard, in some embodiments, the adaptive motion stabilization tuning system 101 identifies vehicle motion data for the vehicle by receiving one or more vehicle inertial measurement inputs (e.g., vehicle IMU inputs) from one or more vehicle inertial measurement units, wherein the vehicle motion data comprises one or more of vehicle acceleration motion (acceleration motion of the vehicle) or vehicle angular motion (angular motion of the vehicle).

In some embodiments, the adaptive motion stabilization tuning system 101 estimates an acceleration motion and/or angular motion of an eye(s) of the user based on the detected acceleration motion and/or angular motion of the device and/or the vehicle. For example, the adaptive motion stabilization tuning system 101 may be configured to generate predicted eye motion data that comprises one or more items of data representative and/or indicative of estimated acceleration motion and/or angular motion of an eye of the user based on the detected acceleration motion and/or angular motion of the device and the vehicle. In some embodiments, the adaptive motion stabilization tuning system 101 leverages one or more specially configured models to generate the predicted eye motion data. In such some embodiments, the adaptive motion stabilization tuning system 101 applies input data comprising one or more of detected acceleration motion of the device, detected angular motion of the device, detected acceleration motion of the vehicle, or detected angular motion of the vehicle to a motion prediction model configured to process the input data and output the predicted motion data comprising one or more items of data representative and/or indicative of estimated acceleration motion and/or angular motion of an eye(s) of the user. For example, in some embodiments, the input data comprises one or more of display acceleration motion data, display angular motion data, vehicle acceleration motion data, or vehicle angular motion data received from one or more IMUs or other devices as described above. In some embodiments, the motion prediction model is a machine learning model. In some embodiments, the motion prediction model is a component of a motion stabilization model framework. In this regard, in such some embodiments, generating predicted eye motion data may comprise applying the device motion data and the vehicle motion data to the motion stabilization model, wherein the predicted eye motion data comprises one or more of estimated acceleration motion of the user's eye or estimated angular motion of the user eye.

In some embodiments, the adaptive motion stabilization tuning system 101 estimates a position change of a gaze of the user's eye on a screen of the device based on the estimated acceleration motion and/or angular motion of the user's eye and/or eye motion due to VOR. In some embodiments, the adaptive motion stabilization tuning system 101 leverages one or more models to estimate a position change of a gaze of the user's eye on the screen of the device based on the estimated acceleration motion and/or angular motion of the user's eye. In some example embodiments, the adaptive motion stabilization tuning system 101 leverages an eye angular VOR motion prediction model and/or eye angular position tracking model to estimate the position change of a gaze of the user's eye on a screen of the device. In such some embodiments, the adaptive motion stabilization tuning system 101 applies the predicted eye motion data to the eye angular VOR motion prediction model and/or eye angular position tracking model to generate predicted gaze position deviation data that comprise one or more items of data representative and/or indicative of estimated position change of a gaze of the user's eye(s) on a screen of the device. In some embodiments, the adaptive motion stabilization tuning system 101, using the eye angular VOR motion prediction model, generates a predicted eye position due to VOR effects. Additionally, in some embodiments, the adaptive motion stabilization tuning system 101, using the eye angular position tracking model, corrects the predicted eye position after head motion has subsided.

In some embodiments, the adaptive motion stabilization tuning system 101 may estimate a position change of the device based on the detected acceleration motion and/or angular motion of the device. In some embodiments, the adaptive motion stabilization tuning system 101 leverages one or more models to estimate a position change of the device based on the detected acceleration motion and/or angular motion of the device. In some embodiments, the adaptive motion stabilization tuning system 101 applies the detected acceleration motion of the device and detected angular motion of the device to one or more model components of the position stabilization model configured to generate predicted device position deviation data comprising one or more items of data representative and/or indicative of estimated position change of the device.

In some embodiments, the adaptive motion stabilization tuning system adjusts the position of an object on the screen of the device based on the estimated position change of the gaze of the eye and/or the estimated position change of the device to account for the estimated position change of the gaze of the eye and the estimated position change of the device. By adjusting the position of an object on the screen of the device to account for the estimated position change of the gaze of the eye and the estimated position change of the device, the adaptive motion stabilization tuning system 101 provides for or otherwise allows the gaze of the user's eye to remain fixed on the object. In some embodiments, adjusting the position of the object on the screen of the device comprises, the adaptive motion stabilization tuning system 101, applying the predicted eye motion data and predicted position data to one or more components of the position stabilization model configured to generate position adjustment data and adjusting the position of the object by an amount, measure, value, and/or the like reflected in the position adjustment data .

### Example Apparatuses of the Disclosure

Having discussed example systems in accordance with the present disclosure, example apparatuses in accordance with the present disclosure will now be described.

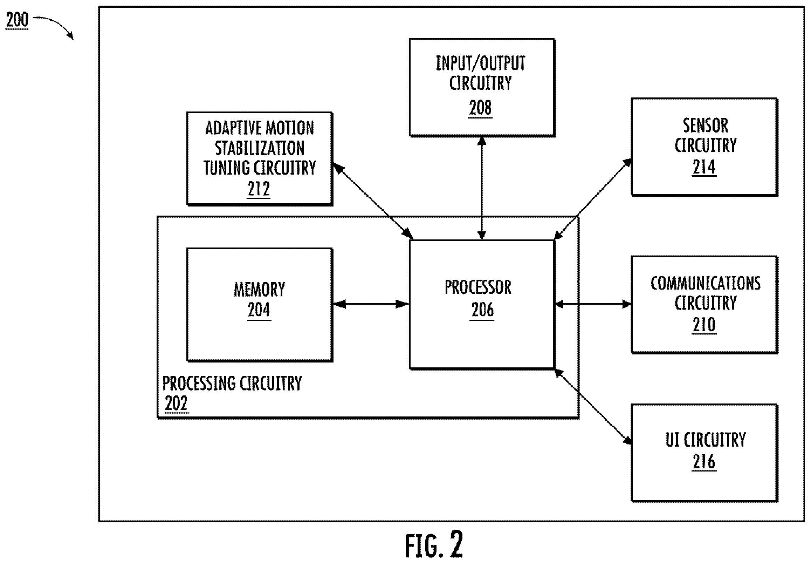

Figure 2 illustrates a block diagram of an apparatus 200 in accordance with some example embodiments. In some embodiments, the system 101 and/or system environment 100 or one or more portions thereof, if embodied in a particular embodiment, may be embodied by one or more apparatuses 200.

In some embodiments, the apparatus 200 may include a processing circuity 202 as shown in Figure 2. It should be noted, however, that the components, or elements illustrated in and described with respect to Figure 2 below may not be mandatory and thus one or more may be omitted in certain embodiments. Additionally, some embodiments, may include further or different components or elements beyond those illustrated in and described with respect to Figure 2. In some embodiments, the functionality of the adaptive motion stabilization tuning system 101, the other devices and/or systems interacting with the adaptive motion stabilization tuning system 101, or any subset thereof may be performed by a single apparatus 200 or multiple apparatuses 200. In some embodiments, the apparatus 200 may comprise one or a plurality of physical devices, including distributed, cloud-based, and/or local devices.

Although some components are described with respect to functional limitations, it should be understood that the particular implementations necessarily include the use of particular computing hardware, such as the hardware shown in Figure 2. It should also be understood that certain of the components described herein may include similar or common hardware. For example, two sets of circuitries for example, may both leverage use of the same processor(s), network interface(s), storage medium(s), and/or the like, to perform their associated functions, such that duplicate hardware is not required for each set of circuitry and a single physical circuitry may be used to perform the functions of multiple circuitries described herein. The use of the term "circuitry" as used herein with respect to components of the apparatuses described herein should therefore be understood to include particular hardware configured to perform the functions associated with the particular circuitry as described herein.

In some embodiments, "circuitry" may include processing circuitry, storage media, network interfaces, input/output devices, and/or the like. In some embodiments, other elements of the apparatus 200 may provide or supplement the functionality of another particular set of circuitry. For example, the processor 206 in some embodiments provides processing functionality to any of the sets of circuitries, the memory 204 provides storage functionality to any of the sets of circuitry, the communications circuitry 210 provide network interface functionality to any of the sets of circuitry, and/or the like.

The apparatus 200 may include or otherwise be in communication with processing circuitry 202 that is configurable to perform actions in accordance with one or more example embodiments disclosed herein. In this regard, the processing circuitry 202 may be configured to perform and/or control performance of one or more functionalities of the apparatus 200 in accordance with various example embodiments, and thus may provide means for performing functionalities of the apparatus 200 in accordance with various example embodiments. The processing circuitry 202 may be configured to perform data processing, application, and function execution, and/or other processing and management services according to one or more example embodiments. In some embodiments, the apparatus 200 or a portion(s) or component(s) thereof, such as the processing circuitry 202, may be embodied as or comprise a chip or chip set. In other words, apparatus 200 or the processing circuitry 202 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 200 or the processing circuitry 202 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 202 may include a processor 206 (and/or co-processor or any other processing circuitry assisting or otherwise associated with the processor) and, in some embodiments, such as that illustrated in Figure 2, may further include memory 204. The processing circuitry 202 may be in communication with or otherwise control a user interface (e.g., embodied by input/output circuitry 208) and/or a communications circuitry 210. As such, the processing circuitry 202 may be embodied as a circuit chip (e.g., an integrated circuit chip) configured (e.g., with hardware, software or a combination of hardware and software) to perform operations described herein.

The processor 206 may be embodied in a number of different ways. For example, the processor 206 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 206 may comprise a plurality of processors. The plurality of processors may be in operative communication with each other and may be collectively configured to perform one or more functionalities of the apparatus 200 as described herein. In some example embodiments, the processor 206 may be configured to execute instructions stored in the memory 204 or otherwise accessible to the processor 206. As such, whether configured by hardware or by a combination of hardware and software, the processor 206 may represent an entity (e.g., physically embodied in circuitry - in the form of processing circuitry 202) capable of performing operations according to embodiments of the present disclosure while configured accordingly. Thus, for example, when the processor 206 is embodied as an ASIC, FPGA or the like, the processor 206 may be specifically configured hardware for conducting the operations described herein. Alternatively, as another example, when the processor 206 is embodied as an executor of software instructions, the instructions may specifically configure the processor 206 to perform one or more operations described herein. The use of the terms "processor" and "processing circuitry" may be understood to include a single core processor, a multi-core processor, multiple processors internal to the apparatus 200, and/or one or more remote or "cloud" processor(s) external to the apparatus 200.

In some example embodiments, the memory 204 may include one or more non-transitory memory devices such as, for example, volatile and/or non-volatile memory that may be either fixed or removable. In this regard, the memory 204 may comprise a non-transitory computer-readable storage medium. It will be appreciated that while the memory 204 is illustrated as a single memory, the memory 204 may comprise a plurality of memories. The memory 204 may be configured to store information, data, applications, instructions and/or the like for enabling the apparatus 200 to carry out various functions in accordance with one or more example embodiments. For example, the memory 204 may be configured to buffer input data for processing by the processor 206. Additionally or alternatively, the memory 204 may be configured to store instructions for execution by the processor 206. The memory 204 may include one or more databases that may store a variety of files, contents, or data sets. Among the contents of the memory 204, applications may be stored for execution by the processor 206 in order to carry out the functionality associated with each respective application. In some cases, the memory 204 may be in communication with one or more of the processors 206, input/output circuitry 208 and/or communications circuitry 210, via a bus(es) for passing information among components of the apparatus 200.

The input/output circuitry 208 may provide output to the user or an intermediary device and, in some embodiments, may receive one or more indication(s) of user input. In some embodiments, the input/output circuitry 208 is in communication with processor 206 to provide such functionality. The input/output circuitry 208 may include one or more user interface(s) and/or include a display that may comprise the user interface(s) rendered as a web user interface, an application interface, and/or the like, to the display of a user device, a backend system, or the like. The input/output circuitry 208 may be in communication with the processing circuitry 202 to receive an indication of a user input at the user interface and/or to provide an audible, visual, mechanical, or other output to the user. As such, the input/output circuitry 208 may include, for example, a keyboard, a mouse, a joystick, a display, a touch screen display, a microphone, a speaker, and/or other input/output mechanisms. As such, the input/output circuitry 208 may, in some example embodiments, provide means for a user to access and interact with the apparatus 200. The processor 206 and/or input/output circuitry 208 comprising or otherwise interacting with the processor 206 may be configured to control one or more functions of one or more user interface elements through computer program instructions (e.g., software and/or firmware) stored on a memory accessible to the processor 206 (e.g., stored on memory 204, and/or the like).

The communications circuitry 210 may include one or more interface mechanisms for enabling communication with other devices and/or networks. In some cases, the communications circuitry 210 may be any means such as a device or circuitry embodied in either hardware, or a combination of hardware and software that is configured to receive and/or transmit data from/to a network and/or any other device or module in communication with the processing circuitry 202. The communications circuitry 210 may, for example, include an antenna (or multiple antennas) and supporting hardware and/or software for enabling communications with a wireless communication network (e.g., a wireless local area network, cellular network, global positing system network, and/or the like) and/or a communication modem or other hardware/software for supporting communication via cable, digital subscriber line (DSL), universal serial bus (USB), Ethernet or other methods.

In some embodiments, the apparatus 200 may include an adaptive motion stabilization tuning circuitry 212 which may include hardware components, software components, and/or a combination thereof configured to, with the processing circuitry 202, input/output circuitry 208 and/or communications circuitry 210, perform one or more functions associated with the adaptive motion stabilization tuning system 101 (as described above with reference to Figure 1).

In some embodiments, the apparatus 200 may include a sensor circuitry 214 which may include hardware components, software components, and/or a combination thereof configured to, with the processing circuitry 202, input/output circuitry 208 and/or communications circuitry 210, perform one or more functions associated with the sensor layer 128 (as described above with reference to Figure 1).

In some embodiments, the apparatus 200 may include a user interface circuitry 216 which may include hardware components, software components, and/or a combination thereof configured to, with the processing circuitry 202, input/output circuitry 208 and/or communications circuitry 210, perform one or more functions associated with the user interface layer 130 (as described above with reference to Figure 1).

### Example Processes/Methods for Adaptive Motion Stabilization Model Tuning

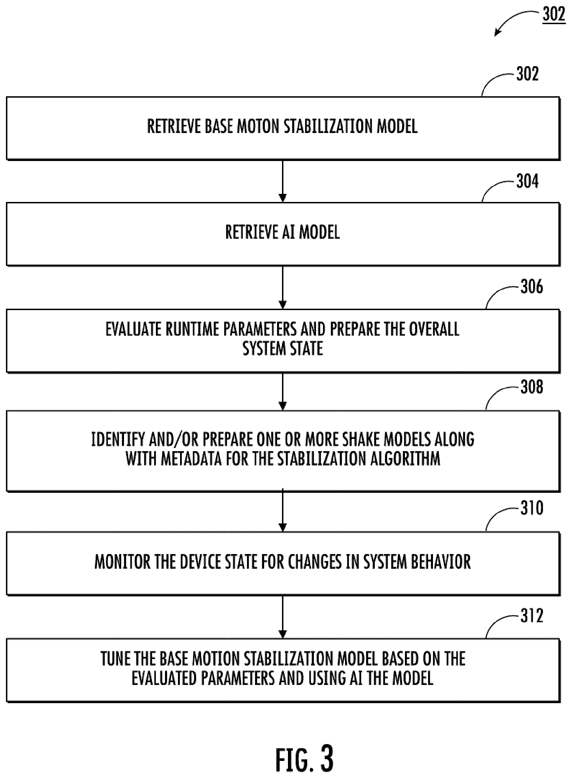

Figure 3 is a flow chart diagram 300 showing example process for adaptive motion stabilization tuning in accordance with at least some embodiments discussed herein. In some example embodiments, the data structures and processes shown and described with respect to the flow chart of Figure 3 may be generated, performed, and/or otherwise facilitated by the various systems and apparatuses shown and described with respect to Figures 1-2.

As depicted at block 302, the process 300 begins with retrieving a base motion stabilization model. The base motion stabilization model may be retrieved from the cloud. In some embodiments, the base motion stabilization model is retrieved from a stabilization model store 104 in the cloud (e.g., cloud services 102). For example, the adaptive motion stabilization tuning system 101 (e.g., using the device manager 118 thereof) may retrieve a base motion stabilization model from the stabilization model store 104. In this regard, the target device 122 (e.g., via the adaptive motion stabilization tuning system 101) may download a base motion stabilization model. In various embodiments, the base motion stabilization model is retrieved from the cloud (e.g., cloud services 102) based upon static parameters.

At block 304, the process 300 continues with retrieving machine learning tuning model 116. The machine learning tuning model 116 may be retrieved from the cloud (e.g., cloud services 102). For example, the adaptive motion stabilization system (e.g., using the device manager 118 thereof) may retrieve or otherwise access the machine learning tuning model 116 from the cloud. In this regard, the target device 122 (e.g., via the adaptive motion stabilization tuning system 101) may download a machine learning tuning model 116 from the cloud services.

At block 306, the process 300 continues with evaluating the runtime parameters and preparing the overall system state. For example, the adaptive motion stabilization tuning system 101 may evaluate and/or analyze the runtime parameters and establish or otherwise prepare the overall system state. In various embodiments, the runtime parameters comprise model parameters leveraged by the motion stabilization model to perform motion stabilization. An example motion stabilization model (e.g., motion stabilization algorithm thereof) according to some embodiments of the present disclosure is configured to estimate an acceleration motion and/or angular motion of an eye of the reader, estimate a position change of an eye gaze on a screen of the display based on the estimated acceleration motion and/or angular motion of the eye and eye motion due to VOR, estimate a position change of the display based on the detected acceleration motion and/or angular motion of the display, and adjust the position of an object in a display to account for the estimated position change of the eye gaze and the estimated position change of the display to allow the eye gaze to remain fixed on the object.

In various embodiments, the metadata (e.g. comprising the model parameters) is automatically populated to control the motion stabilization model to work with the display of the target device or system.

At block 308, the process 300 continues with identifying and/or preparing one or more shake models along with metadata for the motion stabilization model (e.g., for the stabilization algorithm thereof) to operate in various environments. In some embodiments, the adaptive motion stabilization tuning system 101 leverages the auto tuning engine 112 and/or other components of the adaptive motion stabilization tuning system 101 to identify and/or prepare the shake models along with the metadata for the stabilization algorithm to operate in various environments. In various embodiments, the metadata includes one or more tunable parameters such as gaze, gain, roll angle, drift correction, and/or the like.

At block 310, the process continues with monitoring the device state (e.g., such a state of the device 122) in response to an event being triggered. For example, in response to an event being triggered, the device state may be monitored for changes in system behavior. In some embodiments, the adaptive motion stabilization tuning system 101 leverages the situation analyzer engine 108 to monitor the device state. For example, in response to an event being triggered, the situation analyzer engine 108 may continuously monitor the device state for any change in system behavior. For example, the metadata (e.g., one or more parameters thereof) is evaluated based upon dynamically changing context of the target system.

At block 312, the process continues with tunning the base motion stabilization model based on the evaluated and analyzed parameters (e.g., gaze, gain, roll angle, drift correction, and/or the like) to meet the dynamically changing context. In various embodiments, the motion stabilization model is tuned using an AI model. For example, the stabilization model may be tuned using an AI model retrieved (e.g., downloaded from the cloud onto to the device) and based on the evaluated and analyzed parameters to meet the dynamically changing context. In some embodiments, the adaptive motion stabilization tuning system 101 leverages the machine learning tuning model 116 to tune the stabilization model. For example, the adaptive motion stabilization tuning system 101, using the machine learning tuning model 116 retrieved from the cloud services 102 (e.g., the deployed, retrieved, or otherwise accessed machine learning tuning model 116) tunes the motion stabilization model based on the evaluated and analyzed parameters to meet the dynamically changing context.

In various embodiments, The stabilization runtime provides appropriate inputs to the display units to obtain stabilization based on the context which may be dynamic (e.g., change over time).

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A computer-implemented method for adaptive tuning of motion stabilization model, the computer-implemented method comprising:
identifying, by one or more processors, a motion stabilization model associated with a device having a display;
identifying, by the one or more processors, context data associated with the device;
identifying, by the one or more processors, metadata comprising one or more model parameters for the motion stabilization model;
generating, by the one or more processors, model adjustment data based on the context data and the metadata by applying the context data and the metadata to a machine learning tuning model; and
applying, by the one or more processors, the model adjustment data to the motion stabilization model to tune the motion stabilization model, wherein the motion stabilization model is configured to facilitate motion stabilization to account for screen motion of the display of the device and eye motion of a user relative to each other in a vehicle.

2. The computer-implemented method of claim 1, further comprising:
accessing the machine learning tuning model from cloud services.

3. The computer-implemented method of claim 1, wherein the one or more model parameters comprise one or more of gaze, gain, roll angle, or drift correction.

4. The computer-implemented method of claim 1, wherein the device is one of a smartphone, a laptop computer, an avionics display, a primary flight device, or a heads down display.

5. The computer-implemented method of claim 1, wherein identifying the motion stabilization model comprises retrieving the motion stabilization model from a cloud services.

6. The computer-implemented method of claim 1, wherein the motion stabilization comprises adjusting a position of an object on the display of the device based at least in part on a predicted gaze position deviation data of a user's eye.

7. The computer-implemented method of claim 1, wherein the motion stabilization model comprises one or more of (i) eye angular VOR motion prediction model or (ii) eye angular position tracking model.

8. An apparatus for adaptive tuning of motion stabilization model, the apparatus comprising at least one processor and at least one memory storing instructions that, when executed by the at least one processor, cause the apparatus to:
identify a motion stabilization model associated with a device having a display;
identify context data associated with the device;
identify metadata comprising one or more model parameters for the motion stabilization model;
generate model adjustment data based on the context data and the metadata by applying the context data and the metadata to a machine learning tuning model; and
apply the model adjustment data to the motion stabilization model to tune the motion stabilization model, wherein the motion stabilization model is configured to facilitate motion stabilization to account for screen motion of the display of the device and eye motion of a user relative to each other in a vehicle.

9. The apparatus of claim 8, further comprising accessing the machine learning tuning model from cloud services.

10. The apparatus of claim 8, wherein the one or more model parameters comprise one or more of gaze, gain, roll angle, or drift correction.

11. The apparatus of claim 8, wherein the device is one of a smartphone, a laptop computer, an avionics display, a primary flight device, or a heads down display.

12. The apparatus of claim 8, wherein identifying the motion stabilization model comprises retrieving the motion stabilization model from a cloud services.

13. The apparatus of claim 8, wherein facilitating the motion stabilization comprises adjusting a position of an object on the display of the device based at least in part on a predicted gaze position deviation data of a user's eye.

14. The apparatus of claim 8, wherein the motion stabilization model comprises one or more of (i) eye angular VOR motion prediction model or (ii) eye angular VOR motion prediction model.

15. One or more non-transitory computer-readable storage media for adaptive tuning of motion stabilization model, the one or more non-transitory computer-readable storage media including instructions that, when executed by one or more processors, cause the one or more processors to:
identify a motion stabilization model associated with a device having a display;
identify context data associated with the device;
identify metadata comprising one or more model parameters for the motion stabilization model;
generate model adjustment data based on the context data and the metadata by applying the context data and the metadata to a machine learning tuning model; and
apply the model adjustment data to the motion stabilization model to tune the motion stabilization model, wherein the motion stabilization model is configured to facilitate motion stabilization to account for screen motion of the display of the device and eye motion of a user relative to each other in a vehicle.
